# EUROPEAN PATENT SPECIFICATION

(11) **EP 4 138 366 B1**
(45) Date of publication and mention of the grant of the patent: **06.08.2025**
(21) Application number: 22190823.9
(22) Date of filing: 17.08.2022
(51) Int. Cl.: H04L 61/5007, H04L 45/021, H04L 45/28, H04L 61/5061

(54) **METHOD AND APPARATUS FOR ROUTE AGGREGATION HANDLING FOR CONTROL AND USER PLANE SEPARATION**
VERFAHREN UND VORRICHTUNG ZUR ROUTENAGGREGATIONSHANDHABUNG ZUR STEUERUNG UND BENUTZEREBENENTRENNUNG
PROCÉDÉ ET APPAREIL DE GESTION D'AGRÉGATION D'ITINÉRAIRES POUR LE CONTRÔLE ET LA SÉPARATION DU PLAN UTILISATEUR

(30) Priority: 20.08.2021 IN 202121037889; 12.08.2022 US 202217886582
(43) Date of publication of application: 22.02.2023
(73) Proprietor: Mavenir Systems, Inc., Richardson, TX 75081 (US)
(72) Inventor: MISHRA, Abhishek, 562125 Bangalore (IN); PADLIKAR, Vipin, 560048 Bangalore (IN); GUPTA, Rohit, 560035 Bangalore (IN); JINDAL, Tamanna, McKinney, 75070 (US)
(74) Representative: Studio Torta S.p.A.

(56) References cited:
- US-A1- 2017 118 275
- CISCO SYSTEMS ET AL: "Considerations and solution for UE IP address management", vol. SA WG2, no. Saint Kitts, KN; 20160125 - 20160129, 19 January 2016 (2016-01-19), XP051072003, Retrieved from the Internet <URL:http://www.3gpp.org/ftp/tsg_sa/WG2_Arch/TSGS2_113_St_Kitts/Docs/> [retrieved on 20160119]
- CISCO SYSTEMS ET AL: "Considerations and solution for UE IP address management", vol. SA WG2, no. Saint Kitts, KN; 20160125 - 20160129, 17 January 2016 (2016-01-17), XP051059740, Retrieved from the Internet <URL:http://www.3gpp.org/ftp/Meetings_3GPP_SYNC/SA2/Docs/> [retrieved on 20160117]
- HUAWEI: "Pseudo-CR on PGW-C and PGW-U restoration", vol. CT WG4, no. Spokane, US; 20170403 - 20170407, 7 April 2017 (2017-04-07), XP051250410, Retrieved from the Internet <URL:http://www.3gpp.org/ftp/tsg_ct/WG4_protocollars_ex-CN4/TSGCT4_77_Spokane/Docs/> [retrieved on 20170407]
- CISCO SYSTEMS INC: "Pseudo-CR on Solution for PGW-U Failure without Restart - Solution#1", vol. CT WG4, no. Tenerife, Spain; 20160725 - 20160729, 29 July 2016 (2016-07-29), XP051141827, Retrieved from the Internet <URL:http://www.3gpp.org/ftp/tsg_ct/WG4_protocollars_ex-CN4/TSGCT4_74_Tenerife/Docs/> [retrieved on 20160729]
- REKHTER Y ET AL: "A Border Gateway Protocol 4 (BGP-4); rfc4271.txt", A BORDER GATEWAY PROTOCOL 4 (BGP-4)?; RFC4271.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 January 2006 (2006-01-01), XP015054920

## Description

### BACKGROUND OF THE DISCLOSURE

### 1. Field of the Disclosure

The present disclosure relates to systems and methods for 3rd Generation Partnership Project (3GPP) Control Plane and User Plane Separation (CUPS) architecture, and relates more particularly to route aggregation handling for CUPS.

### 2. Description of the Related Art

The 3GPP has defined the Control Plane and User Plane Separation (CUPS) architecture, where Control Plane (CP) (e.g., PGW-C or SMF) can allocate the IP Address to the User Equipment (UE) Packet Data Unit (PDU) Session. When CP allocates an Internet Protocol (IP) Address to a UE PDU Session, it sends the same to the UPF in the Packet Forwarding Control Protocol (PFCP) Message. In such a case, the CP can have a local IP Pool from which it can allocate the IP Address or use Dynamic Host Configuration Protocol (DHCP) procedure to get the IP Address from external IP Pool (sequential range of IP addresses). The IP Pool are configured with IP Addresses in block of routes. For example, in IPv4 IP Address scheme, the blocks can be of varying size via routing protocol such as iBGP, eBGP towards the upstream router. Advertisement of /32 routes leads to bloating of the Routing information based on the routers implementing the lookup and subsequent routing of Downlink (DL) packets time consuming.

The User Plane (UP), e.g., Packet Gate Way-User (PGW-U) or User Plane Function (UPF), has to inform the next hop router about the routes to be used, e.g., Internal Border Gateway Protocol (iBGP) or External Border Gateway Protocol (eBGP) or some other protocol, so that the downlink packets can be sent to the correct UPF by the next hop router. In the present disclosure, the terms UP, UPF and UP node will be used interchangeably.

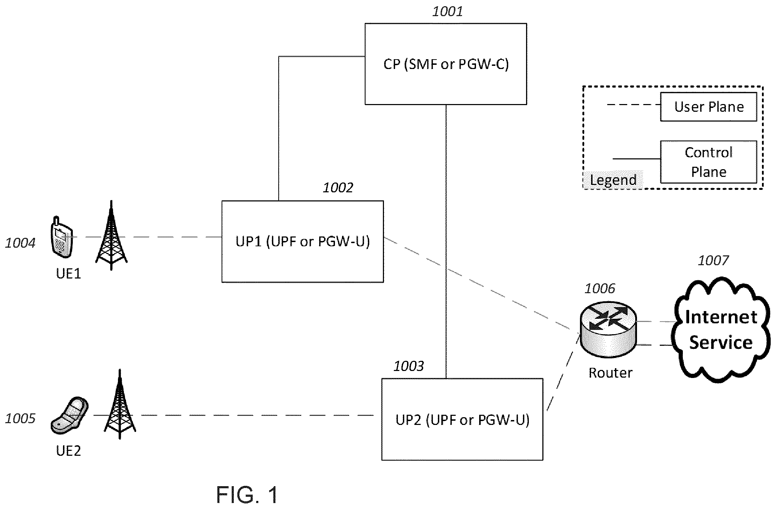

FIG. 1 shows the CP and UP interworking with a router as the next hop. The CP 1001 (which can encompass, e.g., PGW-C or Session Management Function (SMF)) is connected with two user plane nodes (UP1 1002 and UP2 1003), and two UEs are connected with the user plane nodes, i.e., UE1 1004 is connected with UP1 1002, and UE2 1005 is connected with UP2 1003. The user plane traffic of both UE1 1004 and UE2 1005 goes through a router 1006 to the internet service 1007.

When UE IP Address is allocated by the CP, the downlink traffic (i.e., the traffic coming from the internet service 1007 towards a selected UE) routing creates a challenge, as the router 1006 does not know whether it has to route to UP1 or UP2, in the absence of such information provided to the router. More specifically, the router 1006 cannot route the downlink traffic to the correct UP, unless the router 1006 is aware of the UE address or IP Pool details to which the UE address belongs.

In addition, during the process of UP path failure and recovery of the UP, the IP Pool allocated by the CP is to be retrieved again by the standby UP node and propagated to the next hop router, so that the downlink packets can be routed to the correct UP. The IP pools allocated by the CP are not stored at the UP node in persistent memory, because in the course of the UP path failure and recovery of the UP, the IP pools may be reallocated to some other UP.

Furthermore, during the TCP connection reset handling between the UP and the router, the IP pools are to be retrieved again from the CP and propagated to the next hop router, so that the downlink packets can be routed to the correct UP. In the scenario in which the CP allocates the IP Pools and traffic routing is done at the UP, the downlink traffic routing poses a challenge. In addition, in the scenario involving the UP path failure and recovery of the UP, where the routes are not in the persistent storage at the UP, fetching and providing the route to the next hop router for correct downlink packet routing to the updated UP poses a challenge. Proposals for UE IP address management by allocating the UE IP address management function to the control plane function of the PGW are provided by the following documents: i) CISCO SYSTEMS et al., "Considerations and solutions for UE IP address management", 3GPP DRAFT; vol. SA WG2, no. Saint Kitts, KN; 19 January 2016; XP051072003; and ii) CISCO SYSTEMS et al., "Considerations and solutions for UE IP address management", 3GPP DRAFT; vol. SA WG2, no. Saint Kitts, KN; 19 January 2016; XP051059740. iii) HUAWEI: "Pseudo-CR on PGW-C and PGW-U restoration" vol. CT WG4, no. Spokane, 7 April 2017; XP051250410 However, the above-mentioned issues are not solved. Therefore, there is a need to provide solutions to these issues.

### SUMMARY OF THE DISCLOSURE

The present invention relates to a method and a system as claimed in the annexed claims. In accordance with the invention, in the case when the CP is allocating the IP pools and data traffic routing is done at the UP, a method is provided for obtaining the IP pool blocks and providing them to the next hop router for the correct packet routing. During the start or update of the CP-UP association, the CP sends the routes to be used to the UP in an information element (IE), e.g., a vendor-specific IE.

In accordance with the invention, during the update of the CP-UP association, the CP can decide to remove certain routes to be used by the UP (e.g., in a vendor-specific IE). An Association Update Request is sent by the CP to the UP, which Association Update Request includes, e.g., Route Aggregation IE, which in turn contains an Action IE (in this example, DELETE) and APN/DNN Route Aggregation IE. The APN/DNN Route Aggregation IE contains the field "IP Pool Route Aggregation" (the routes to be deleted by the UP).

According to an example embodiment of the present disclosure, during the UP path failure and recovery, when the standby UP takes over after the UP path failure and recovery, the standby UP shall send an Association Update Request to obtain the route(s). An Association Update Request is sent by the UP to the CP, which Association Update Request includes, e.g., Route Aggregation IE. In response, the CP sends the Association Update Response with Route Aggregation IE containing the Action IE (ADD) and APN/DNN Route Aggregation IE containing the field "IP Pool Route Aggregation" (the routes to be used by the UP.

According to an example embodiment of the present disclosure, in a scenario involving a reset of the Transmission Control Protocol (TCP) connection between a router and the UP, in order to handle this reset, the UP shall fetch the routes from the respective CP and install the routes to the next hop router.

### BRIEF DESCRIPTION OF THE FIGURES

FIG. 1 shows the CP and UP interworking with a router as the next hop.
FIG. 2 shows an example of provisioning of routes by the CP to the UP.
FIG. 3 shows an example signal flow diagram of route-deletion initiated by the CP.
FIG. 4 shows an example signal flow diagram for UP path failure and recovery.
FIG. 5 shows an example signal flow diagram for TCP connection reset handling.

### DETAILED DESCRIPTION

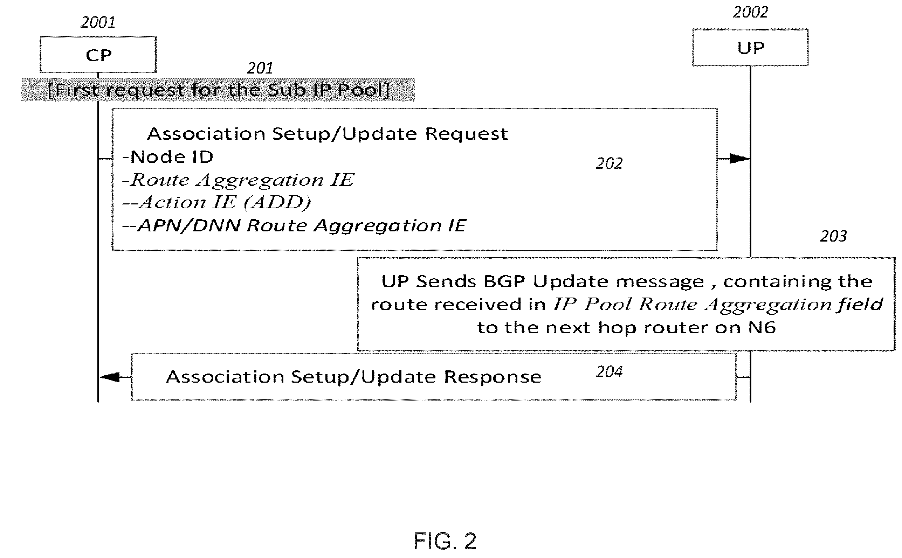

In accordance with the invention, in the case when the CP is allocating the IP pools and traffic routing is done at the UP, a solution is provided for obtaining the IP pool blocks and providing them to the next hop router for the correct packet routing. As shown in FIG. 2, during the start or update of the CP-UP association, the CP 2001 shall send the routes to be used to the UP 2002 in an information element (IE), e.g., a vendor-specific IE. As referenced by 201, the "first request for the Sub IP Pool" is done at the CP 2001, i.e., the CP executes a procedure in which it allocates the first IP address from an unused sub IP Pool to a UE while allocating it to a Packet Data Unit (PDU) session. Next, as shown in the block 202, an Association Setup Request or Association Update Request is sent by the CP 2001 to the UP 2002, which Association Setup Request or Association Update Request includes the following: node ID; and Route Aggregation IE. The Route Aggregation IE in turn contains and Action IE (in this example, ADD) and ACCESS POINT NAME (APN)/DATA NETWORK NAME (DNN) Route Aggregation IE. The APN/DNN Route Aggregation IE contains the field "IP Pool Route Aggregation" (the routes to be used by the UP 2002). Next, as shown in the block 203, UP 2002 sends a Border Gateway Protocol (BGP) Update message to the next hop router (e.g., on N6 interface), which BGP Update message contains the route received in IP Pool Route Aggregation field. Subsequently, as shown in the block 204, the UP 2002 sends an association setup/update response to the CP 2001. As shown in FIG. 2, the CP 2001 is sending the Route Aggregation IE to ADD a route, which is an operation unsolicited by the UP 2002.

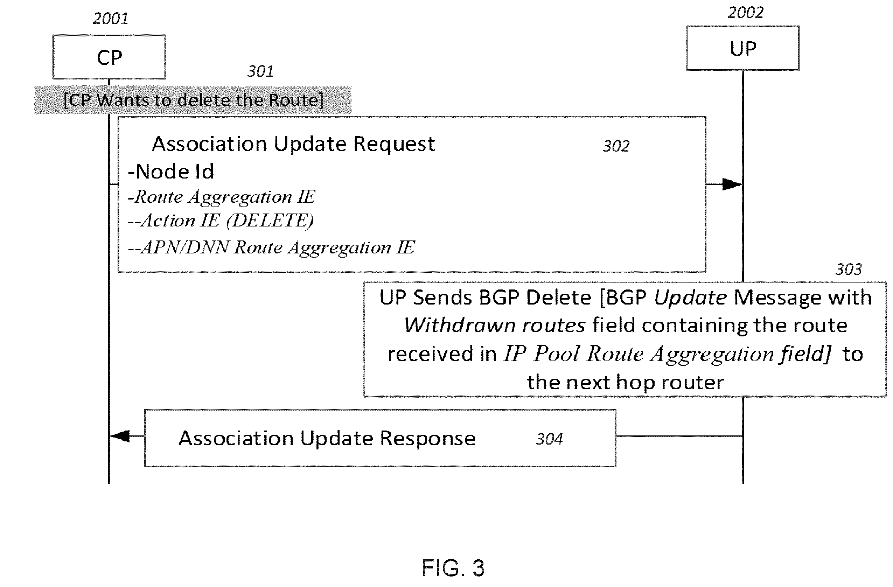

FIG. 3 shows an example signal flow diagram of route-deletion initiated by the CP. During the update of the Association, the CP can decide to remove certain routes to be used by the UP (e.g., in a vendor-specific IE). As referenced by 301, the CP 2001 wants to delete one or more specified routes belonging to a given pool. Next, as shown in the block 302, an Association Update Request is sent by the CP 2001 to the UP 2002, which Association Update Request includes the following: node ID; and Route Aggregation IE. The Route Aggregation IE in turn contains an Action IE (in this example, DELETE) and APN/DNN Route Aggregation IE. The APN/DNN Route Aggregation IE contains the field "IP Pool Route Aggregation" (the routes to be deleted by the UP 2002). Next, as shown in the block 303, UP 2002 sends a Border Gateway Protocol (BGP) Delete message to the next hop router, which BGP Delete message is BGP Update message with Withdrawn Routes field containing the route received in IP Pool Route Aggregation field. Subsequently, as shown in the block 304, the UP 2002 sends an Association Update Response to the CP 2001. As shown in FIG. 3, the CP 2001 is sending the Route Aggregation IE to DELETE a route, which is an operation unsolicited by the UP 2002.

In this section, previously mentioned Route Aggregation IE will be discussed in greater detail. As mentioned in connection with FIGS. 2 and 3, the UP 2002 receives from the CP 2001 indication of the relevant routes in a Route Aggregation IEs, e.g., vendor-specific IEs. In the Route Aggregation IE, the specific Action shall be encoded as an integer, i.e., allowed values are: ADD=1; DELETE=2; and GET=3. Number of APN/DNN Route Aggregation Information shall be encoded as an integer, i.e., allowed values are 0-65535. This shall be equal to the number of APN/DNN Route Aggregation Information IE in the message. It should be noted that the value 0 is used when there is no APN/DNN Route Aggregation Information IE in the message for the Action ADD or DELETE.

APN/DNN Route Aggregation IE shall be specified by including: Network Instance IE; Number of IP Pool Route Aggregation; and IP Pool Route Aggregation IE. Network Instance IE field shall be encoded as 3GPP-defined Network Instance IE (type 22), and it shall contain Network Identifier (NI) and Operator Identifier (OI) field (i.e., APN/DNN Name) and will be provided as a string. Number of IP Pool Route Aggregation shall be encoded as an integer, i.e., allowed values are 1-65535. This shall be the number of IP Pool Route Aggregation IE in the message, which IP Pool Route Aggregation IE can be a vendor-specific IE. IP Pool Route Aggregation IE shall be specified by: IP Pool Route Aggregation shall be encoded as an OctetString. As an example, IP Pool Route Aggregation can be encoded 10.10.1.1/24

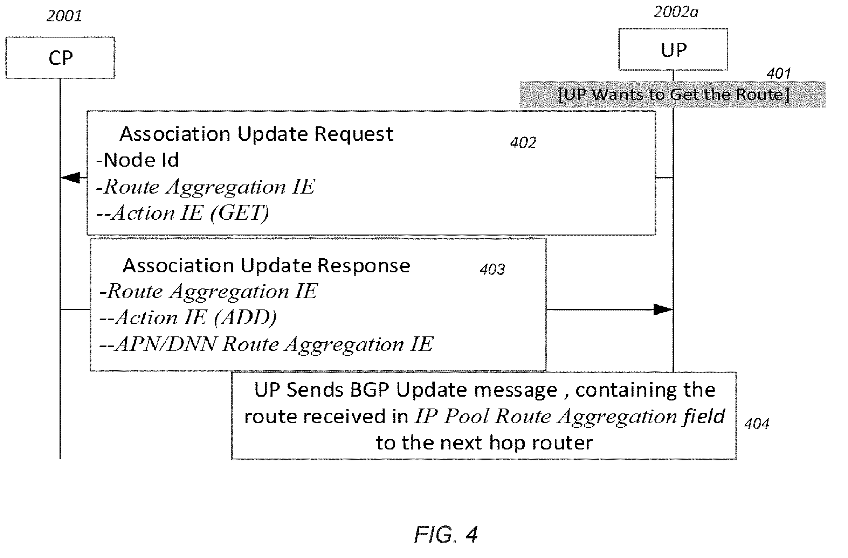

According to an example embodiment of the present disclosure, during the UP path failure and recovery, when the standby UP takes over after the UP path failure and recovery, the standby UP shall send an Association Update Request to obtain the route(s). FIG. 4 shows an example signal flow diagram for this scenario. As referenced by 401, the standby UP 2002a (that has taken over after the UP path failure and recovery) wants to obtain the route. As shown in the block 402, an Association Update Request is sent by the UP 2002a to the CP 2001, which Association Update Request includes the following: node ID; and Route Aggregation IE containing the Action IE (in this example, GET). In response, as shown in the block 403, the CP 2001 sends the Association Update Response with Route Aggregation IE containing the Action IE (ADD) and APN/DNN Route Aggregation IE. The APN/DNN Route Aggregation IE contains the field "IP Pool Route Aggregation" (the routes to be used by the UP 2002a). If there are no routes, then the CP 2001 shall send the Association Update Response with no Route Aggregation IE. The existing session shall not be impacted due to failure of Association Update Request. Upon receiving the routes, the UP 2002a sends a Border Gateway Protocol (BGP) Update message to the next hop router (as shown in the block 404), which BGP Update message contains the route received in IP Pool Route Aggregation field.

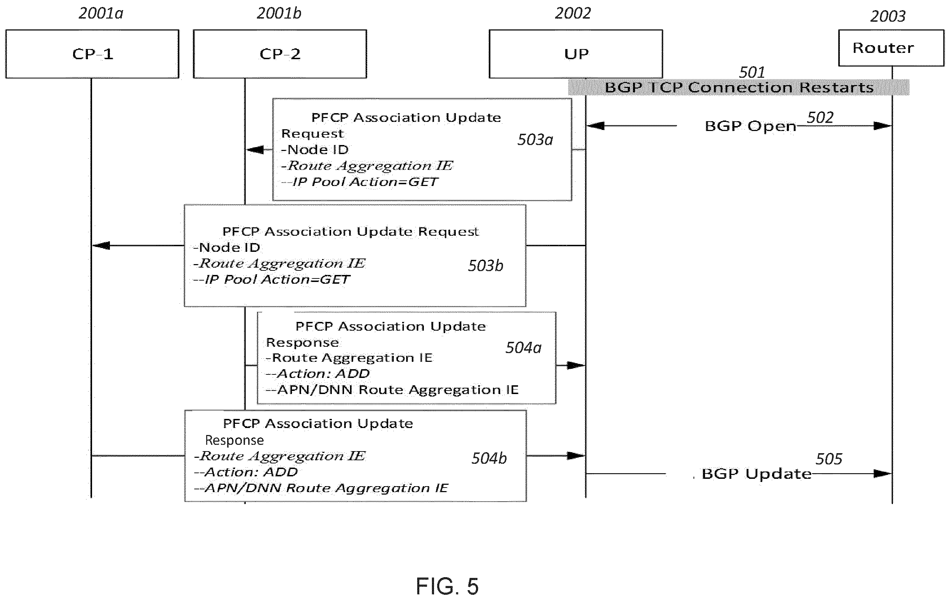

According to an example embodiment of the present disclosure, in a scenario involving a reset of the Transmission Control Protocol (TCP) connection between a router and the UP, in order to handle this reset, the UP shall fetch the routes from the respective CP and install the routes to the next hop router. This example scenario is illustrated in FIG. 5, which shows two CPs (CP-1 2001a, and CP-2 2001b), to which the UP 2002 is connected, and Router 2003 is connected to the UP 2002. As shown at 501, a BGP TCP connection with Router 2003 restarts, and the UP 2002 or the Router 2003 initiates the BGP Open message (as shown at 502). Next, as shown at the blocks 503a and 503b, the UP 2002 sends the Packet Forwarding Control Protocol (PFCP) Association Update Request containing Node ID and Route Aggregation IE (which in turn contains IP Pool Action=GET) to CP-2 2001b (as shown in block 503a) and CP-1 2001a (as shown in block 503b) with which the UP 2002 has the Setup. In response, the CP-2 2001b and CP-1 2001a send (in blocks 504a and 504b, respectively) the respective PFCP Association Update Response containing the Route Aggregation IE (which in turn contains Action IE (ADD) and APN/DNN Route Aggregation IE) to the to the UP 2002 if there are routes association for the given UP 2002. The Response shall not contain any Route Aggregation IE in the case there are no routes to be advertised for the UP 2002. Next, as shown at 505, the UP 2002 sends the BGP Update message to the Router 2003 for the route updates.

In summary, in accordance with an example embodiment of the present disclosure, in the case when CP is allocating the IP Pools and traffic routing is done at the UP, thereby presenting a challenge in the downlink traffic routing, the example embodiment solves the issue of obtaining the IP Pool blocks and providing it to the next hop router for the correct packet routing. In accordance with an example embodiment of the present disclosure, in the case of the UP path failure and recovery of the UP, where the routes are not in the persistent storage at the UP, the IP Pool allocated by the CP is to be retrieved again by the standby UP and propagated to the next hop router, so that the downlink packets can be routed to the correct UP.

An example method of route aggregation handling for 3rd Generation Partnership Project (3GPP) Control Plane and User Plane Separation (CUPS) architecture comprises: allocating, by a Control Plane (CP) node, an Internet Protocol (IP) Address from an IP pool to a selected User Equipment (UE) for a Packet Data Unit (PDU) session; performing, by a User Plane (UP) node, data traffic routing between an internet service provider (ISP) and the UE; and sending, by the CP node to the UP node during one of a start or update of an association between the CP node and the UP node, one of: i) transmission routes to be used for the data traffic routing between the ISP and the UE; or ii) transmission routes to be deleted for the data traffic routing between the ISP and the UE. The transmission routes to be used (or alternatively, deleted) are provided by the CP node in a route aggregation information element within one of an association setup request or an association update request sent to the UP node.

An example system for route aggregation handling for 3rd Generation Partnership Project (3GPP) Control Plane and User Plane Separation (CUPS) architecture comprises: a Control Plane (CP) node configured to allocate an Internet Protocol (IP) Address from an IP pool to a selected User Equipment (UE) for a Packet Data Unit (PDU) session; and a User Plane (UP) node configured to perform data traffic routing between an internet service provider (ISP) and the UE; and wherein the CP node is configured to send to the UP node, during one of a start or update of an association between the CP node and the UP node, one of: i) transmission routes to be used for the data traffic routing between the ISP and the UE; or ii) transmission routes to be deleted for the data traffic routing between the ISP and the UE. The transmission routes to be used (or alternatively, deleted) are provided by the CP node in a route aggregation information element within one of an association setup request or an association update request sent to the UP node.

### Acronyms

- 5G: 5^{th} Generation
- 5GC: 5G Core Network
- 5GS: 5G System
- APN: ACCESS POINT NAME
- BGP: Border Gateway Protocol
- CP: Control Plane
- DHCP: Dynamic Host Configuration Protocol
- DL: Downlink
- DNN: DATA NETWORK NAME
- IE: Information Element
- NI: Network Identifier
- OI: Operator Identifier
- PDU: Packet Data Unit
- PGW-C: Packet Gate Way - Control
- PGW-U: Packet Gate Way - User
- SMF: Session Management Function
- TCP: Transmission Control Protocol
- UL: Uplink
- UP: User Plane
- UPF: User Plane Function

## Claims

1. A method of route aggregation handling for 3rd Generation Partnership Project, 3GPP, Control Plane and User Plane Separation, CUPS, architecture, comprising:
allocating (201), by a Control Plane, CP, node (2001), an Internet Protocol, IP, Address from an IP pool to a selected User Equipment, UE, for a Packet Data Unit, PDU, session, the IP pool being configured with IP pool blocks comprising routes for packet routing;
performing, by a User Plane, UP, node (2002), data traffic routing between an internet service provider, ISP, and the UE using routes from the IP pool; and
sending (302), by the CP node to the UP node, as part of one of an association setup request or an association update request during one of a start or update of an association between the CP node and the UP node, one of:
i) transmission routes in the IP pool to be used for the data traffic routing between the ISP and the UE, wherein the transmission routes to be used are provided by the CP node in a route aggregation information element within the one of the association setup request or the association update request sent to the UP node; or
ii) transmission routes to be deleted from the IP pool for the data traffic routing between the ISP and the UE, wherein the transmission routes to be deleted are provided by the CP node in a vendor-specific Information Element, IE, within the one of the association setup request or the association update request sent to the UP node,
wherein the transmission routes to be used by the UP are contained in an IP pool Aggregation field within said vendor-specific IE
further comprising:
sending, by the UP node to a next hop router, a Border Gateway Protocol, BGP, Update message containing the IP pool Route Aggregation field.

2. The method according to claim 1, wherein the transmission routes to be deleted are contained in internet protocol, IP, pool route aggregation field within the route aggregation information element.

3. The method according to claim 1, further comprising:
sending, by the UP node to a next hop router, a Border Gateway Protocol, BGP, Update message containing the IP pool route aggregation field.

4. The method according to claim 1, further comprising:
in the case of a UP path failure involving the UP node, sending by a standby UP node to the CP node an association update request for the transmission routes to be used for the data traffic routing between the ISP and the UE.

5. A system for route aggregation handling for 3rd Generation Partnership Project, 3GPP, Control Plane and User Plane Separation, CUPS, architecture, comprising:
a Control Plane, CP, node (2001) configured to allocate (201) an Internet Protocol, IP, Address from an IP pool to a selected User Equipment, UE, for a Packet Data Unit, PDU, session, the IP pool being configured with IP pool blocks comprising routes for packet routing; and
a User Plane, UP, node (2002) configured to perform data traffic routing between an internet service provider, ISP, and the UE using routes from the IP pool; and
wherein the CP node is configured to send (302) to the UP node, during one of a start or update of an association between the CP node and the UP node and as part of one of an association setup request or an association update request, one of:
i) transmission routes in the IP pool to be used for the data traffic routing between the ISP and the UE, wherein the transmission routes to be used are provided by the CP node in a route aggregation information element within the one of the association setup request or the association update request sent to the UP node;
ii) transmission routes to be deleted from the IP pool for the data traffic routing between the ISP and the UE, wherein the transmission routes to be deleted are provided by the CP node in a vendor-specific Information Element, IE within the one of the association setup request or the association update request sent to the UP node; or
iii) transmission routes in the IP pool to be withdrawn for the data traffic routing between the ISP and the UE,
wherein the transmission routes to be used by the UP are contained in an IP pool Aggregation field within said vendor-specific IE
further comprising:
sending, by the UP node to a next hop router, a Border Gateway Protocol, BGP, Update message containing the IP pool Route Aggregation field.

6. The system according to claim 5, wherein the transmission routes to be deleted are contained in internet protocol, IP, pool route aggregation field within the route aggregation information element.

7. The system according to claim 5, wherein the UP node is configured to send to a next hop router, a Border Gateway Protocol, BGP, Update message containing the IP pool route aggregation field.

8. The system according to claim 5, further comprising:
a standby UP node configured to send to the CP node, in the case of a UP path failure involving the UP node, an association update request for the transmission routes to be used for the data traffic routing between the ISP and the UE.

## Patentansprüche

1. Verfahren zur Routenaggregationshandhabung für die Architektur der Steuerebenen- und Benutzerebenen-Trennung (Control Plane and User Plane Separation, CUPS) des 3rd Generation Partnership Project (3GPP), umfassend:
Zuweisen (201), durch einen Steuerebenen (Control Plane, CP) -Knoten (2001), einer Internetprotokoll (IP)-Adresse aus einem IP-Pool an ein ausgewähltes Benutzergerät (User Equipment, UE) für eine Paketdateneinheit (Packet Data Unit, PDU)-Sitzung, wobei der IP-Pool mit IP-Pool-Blöcken konfiguriert ist, die Routen für das Paketrouting umfassen,
Durchführen, durch einen Benutzerebenen (UP)-Knoten (2002), des Datenverkehrsrouting zwischen einem Internetdienstleister (Internet Service Provider, ISP) und dem UE unter Verwendung von Routen aus dem IP-Pool und
Senden (302), durch den CP-Knoten an den UP-Knoten, als Teil von einer aus einer Association Setup-Anfrage oder einer Association Update-Anfrage während eines aus einem Beginn oder einer Aktualisierung einer Assoziation zwischen dem CP-Knoten und dem UP-Knoten, eines aus:
i) für das Datenverkehrsrouting zwischen dem ISP und dem UE zu verwendende Übertragungsrouten im IP-Pool, wobei die zu verwendenden Übertragungsrouten vom CP-Knoten in einem Routenaggregationsinformationselement innerhalb der einen aus der an den UP-Knoten gesendeten Association Setup-Anfrage oder Association Update-Anfrage bereitgestellt werden, oder
ii) aus dem IP-Pool für das Datenverkehrsrouting zwischen dem ISP und dem UE zu löschende Übertragungsrouten, wobei die zu löschenden Übertragungsrouten vom CP-Knoten in einem anbieterspezifischen Informationselement (IE) innerhalb der einen aus der an den UP-Knoten gesendeten Association Setup-Anfrage oder Association Update-Anfrage bereitgestellt werden,
wobei die von der UP zu verwendenden Übertragungsrouten in einem IP-Pool-Aggregationsfeld innerhalb der anbieterspezifischen IE enthalten sind,
ferner umfassend:
Senden, durch den UP-Knoten an einen Next-Hop-Router, einer Border Gateway Protocol (BGP)-Aktualisierungsnachricht, die das IP-Pool-Routenaggregationsfeld enthält.

2. Verfahren nach Anspruch 1 wobei die zu löschenden Übertragungsrouten im Internetprotokoll (IP)-Pool-Routenaggregationsfeld innerhalb des Routenaggregationsinformationselements enthalten sind.

3. Verfahren nach Anspruch 1, ferner umfassend:
Senden, durch den UP-Knoten an einen Next-Hop-Router, einer Border Gateway Protocol (BGP)-Aktualisierungsnachricht, die das IP-Pool-Routenaggregationsfeld enthält.

4. Verfahren nach Anspruch 1, ferner umfassend:
im Fall eines UP-Pfad-Fehlschlags, an dem der UP-Knoten beteiligt ist, Senden, durch einen Standby-UP-Knoten an den CP-Knoten, einer Association Update-Anfrage hinsichtlich der für das Datenverkehrsrouting zwischen dem ISP und dem UE zu verwendenden Übertragungsrouten.

5. System zur Routenaggregationshandhabung für die Architektur der Steuerebenen- und Benutzerebenentrennung (Control Plane and User Plane Separation, CUPS) des 3rd Generation Partnership Project (3GPP), umfassend:
einen Steuerebenen (Control Plane, CP)-Knoten (2001), der dafür konfiguriert ist, eine Internetprotokoll (IP)-Adresse aus einem IP-Pool einem ausgewählten Benutzergerät (User Equipment, UE) für eine Paketdateneinheit (Packet Data Unit, PDU)-Sitzung zuzuweisen (201), wobei der IP-Pool mit IP-Pool-Blöcken konfiguriert ist, die Routen für das Paketrouting umfassen, und
einen Benutzerebenen (User Plane, UP)-Knoten (2002), der dafür konfiguriert ist, Datenverkehrsrouting zwischen einem Internetanbieter (Internet Service Provider, ISP) und dem UE unter Verwendung von Routen aus dem IP-Pool durchzuführen, und
wobei der CP-Knoten dafür konfiguriert ist, an den UP-Knoten während eines aus einem Beginn oder einer Aktualisierung einer Assoziation zwischen dem CP-Knoten und dem UP-Knoten und als Teil von einem aus einer Association Setup-Anfrage oder einer Association Update-Anfrage eines der Folgenden zu senden (302):
i) für das Datenverkehrsrouting zwischen dem ISP und dem UE zu verwendende Übertragungsrouten im IP-Pool, wobei die zu verwendenden Übertragungsrouten vom CP-Knoten in einem Routenaggregationsinformationselement innerhalb der einen aus der an den UP-Knoten gesendeten Association Setup-Anfrage oder Association Update-Anfrage bereitgestellt werden,
ii) aus dem IP-Pool für das Datenverkehrsrouting zwischen dem ISP und dem UE zu löschende Übertragungsrouten, wobei die zu löschenden Übertragungsrouten vom CP-Knoten in einem anbieterspezifischen Informationselement (IE) innerhalb der einen aus der an den UP-Knoten gesendeten Association Setup-Anfrage oder Association Update-Anfrage bereitgestellt werden, oder
(iii) für das Datenverkehrsrouting zwischen dem ISP und dem UE zurückzuziehende Übertragungsrouten im IP-Pool,
wobei die vom UP zu verwendenden Übertragungsrouten in einem IP-Pool-Aggregationsfeld innerhalb der anbieterspezifischen IE enthalten sind,
ferner umfassend:
Senden, durch den UP-Knoten an einen Next-Hop-Router, einer Border Gateway Protocol (BGP)-Aktualisierungsnachricht, die das IP-Pool-Routenaggregationsfeld enthält.

6. System nach Anspruch 5, wobei die zu löschenden Übertragungsrouten im Internetprotokoll (IP)-Pool-Routenaggregationsfeld innerhalb des Routenaggregationsinformationselements enthalten sind.

7. System nach Anspruch 5, wobei der UP-Knoten dafür konfiguriert ist, eine das IP-Pool-Routenaggregationsfeld enthaltende Border Gateway Protocol (BGP)-Aktualisierungsnachricht an einen Next-Hop-Router zu senden.

8. System nach Anspruch 5, ferner umfassend:
einen Standby-UP-Knoten, der dafür konfiguriert ist, im Fall eines UP-Pfad-Fehlschlags, an dem der UP-Knoten beteiligt ist, eine Association Update-Anfrage hinsichtlich der für das Datenverkehrsrouting zwischen dem ISP und dem UE zu verwendenden Übertragungsrouten an den CP-Knoten zu senden.

## Revendications

1. Procédé de gestion d'agrégation d'itinéraires pour un projet de partenariat de 3^{e} génération, 3GPP, une séparation d'un plan de contrôle et d'un plan utilisateur, CUPS, une architecture, comprenant :
l'attribution (201), par un nœud (2001) de plan de contrôle, CP, d'un protocole Internet, IP, d'une adresse d'un groupe IP à un équipement utilisateur sélectionné, UE, pour une session d'unité de données par paquets, PDU, le groupe IP étant configuré avec des blocs de groupe IP comprenant des itinéraires pour le routage de paquets ;
l'exécution, par un nœud (2002) de plan utilisateur, UP, du routage du trafic de données entre un fournisseur de services Internet, ISP, et l'UE à l'aide des itinéraires du groupe IP ; et
l'envoi (302), par le nœud CP au nœud UP, dans le cadre d'une demande d'établissement d'association ou d'une demande de mise à jour d'association lors d'un démarrage ou d'une mise à jour d'une association entre le nœud CP et le nœud UP, de l'un des éléments suivants :
i) les itinéraires de transmission dans le groupe IP à utiliser pour le routage du trafic de données entre l'ISP et l'UE, où les itinéraires de transmission à utiliser sont fournis par le nœud CP dans un élément d'information d'agrégation d'itinéraires dans l'une de la demande d'établissement d'association ou de la demande de mise à jour d'association envoyée au nœud UP ; ou
ii) les itinéraires de transmission à supprimer du groupe IP pour le routage du trafic de données entre l'ISP et l'UE, dans lequel les itinéraires de transmission à supprimer sont fournis par le nœud CP dans un élément d'information particulier au fournisseur, IE, dans l'une de la demande d'établissement d'association ou de la demande de mise à jour d'association envoyée au nœud UP,
dans lequel les itinéraires de transmission à utiliser par l'UP sont contenus dans un champ d'agrégation du groupe IP au sein dudit IE particulier au fournisseur
comprenant en outre :
l'envoi, par le nœud UP à un routeur de saut suivant, d'un message de mise à jour du Border Gateway Protocol, BGP, contenant le champ d'agrégation des itinéraires du groupe IP.

2. Procédé selon la revendication 1, dans lequel les itinéraires de transmission à supprimer sont contenus dans un champ d'agrégation d'itinéraires de groupe de protocole Internet, IP, dans l'élément d'information d'agrégation des itinéraires.

3. Procédé selon la revendication 1, comprenant en outre :
l'envoi, par le nœud UP à un routeur de saut suivant, d'un message de mise à jour du Border Gateway Protocol, BGP, contenant le champ d'agrégation des itinéraires de groupe IP.

4. Procédé selon la revendication 1, comprenant en outre :
en cas de défaillance du chemin UP impliquant le nœud UP, l'envoi par un nœud UP en attente au nœud CP une demande de mise à jour d'association pour les itinéraires de transmission à utiliser pour le routage du trafic de données entre l'ISP et l'UE.

5. Système de gestion d'agrégation d'itinéraires pour un projet de partenariat de 3^{e} génération, 3GPP, une séparation d'un plan de contrôle et d'un plan utilisateur, CUPS, une architecture, comprenant :
un nœud (2001) de plan de contrôle, CP, configuré pour attribuer (201) un protocole Internet, IP, une adresse d'un groupe IP à un équipement utilisateur sélectionné, UE, pour une session d'unité de données par paquets, PDU, le groupe IP étant configuré avec des blocs de groupe IP comprenant des itinéraires pour le routage de paquets ; et
un nœud (2002) de plan utilisateur, UP, configuré pour exécuter le routage du trafic de données entre un fournisseur de services Internet, ISP, et l'UE à l'aide des itinéraires du groupe IP ; et
dans lequel le nœud CP est configuré pour envoyer (302) au nœud UP, lors d'un démarrage ou d'une mise à jour d'une association entre le nœud CP et le nœud UP et dans le cadre d'une demande de configuration d'association ou d'une demande de mise à jour d'association, un des éléments suivants :
i) les itinéraires de transmission dans le groupe IP à utiliser pour le routage du trafic de données entre l'ISP et l'UE, où les itinéraires de transmission à utiliser sont fournis par le nœud CP dans un élément d'information d'agrégation d'itinéraires dans l'une de la demande d'établissement d'association ou de la demande de mise à jour d'association envoyée au nœud UP ;
ii) les itinéraires de transmission à supprimer du groupe IP pour le routage du trafic de données entre l'ISP et l'UE, dans lequel les itinéraires de transmission à supprimer sont fournis par le nœud CP dans un élément d'information particulier au fournisseur, IE, dans l'une de la demande d'établissement d'association ou de la demande de mise à jour d'association envoyée au nœud UP ; ou
iii) les itinéraires de transmission dans le groupe IP à retirer pour le routage du trafic de données entre l'ISP et l'UE,
dans lequel les itinéraires de transmission à utiliser par l'UP sont contenus dans un champ d'agrégation du groupe IP au sein dudit IE particulier au fournisseur
comprenant en outre :
l'envoi, par le nœud UP à un routeur de saut suivant, d'un message de mise à jour du Border Gateway Protocol, BGP, contenant le champ d'agrégation des itinéraires du groupe IP.

6. Système selon la revendication 5, dans lequel les itinéraires de transmission à supprimer sont contenus dans un champ d'agrégation d'itinéraires du groupe de protocole Internet, IP, dans l'élément d'information d'agrégation des itinéraires.

7. Système selon la revendication 5, dans lequel le nœud UP est configuré pour envoyer à un routeur de saut suivant, un message de mise à jour du Border Gateway Protocol, BGP, contenant le champ d'agrégation des itinéraires du groupe IP.

8. Système selon la revendication 5, comprenant en outre :
un nœud UP en attente configuré pour envoyer au nœud CP, en cas de défaillance du chemin UP impliquant le nœud UP, d'une demande de mise à jour d'association pour les itinéraires de transmission à utiliser pour le routage du trafic de données entre l'ISP et l'UE.
